**Europäisches Patentamt**

**European Patent Office**

**Office européen des brevets**

(19)

(11) Veröffentlichungsnummer : **0 367 751 B1**

(12) **EUROPÄISCHE PATENTSCHRIFT**

(45) Veröffentlichungstag der Patentschrift :
**18.03.92 Patentblatt 92/12**

(51) Int. Cl.⁵ : **C21C 5/56**, C21C 5/28,
        C21C 5/46

(21) Anmeldenummer : **89890251.5**

(22) Anmeldetag : **26.09.89**

(54) **Verfahren zum kontinuierlichen Schmelzen von Schrott und/oder Roheisen sowie Vorrichtung zur Durchführung dieses Verfahrens.**

(30) Priorität : **27.09.88 AT 2377/88**

(43) Veröffentlichungstag der Anmeldung :
**09.05.90 Patentblatt 90/19**

(45) Bekanntmachung des Hinweises auf die
Patenterteilung :
**18.03.92 Patentblatt 92/12**

(84) Benannte Vertragsstaaten :
**AT BE CH DE ES FR GB GR IT LI LU NL SE**

(56) Entgegenhaltungen :
**EP-A- 0 240 485**
**DE-A- 3 531 261**
**DE-C- 11 840**
**GB-A- 444 758**
**US-A- 4 269 399**

(73) Patentinhaber : **VOEST-ALPINE
INDUSTRIEANLAGENBAU GESELLSCHAFT
m.b.H.
Turmstrasse 44
A-4020 Linz (AT)**
Patentinhaber : **VOEST-ALPINE STAHL
DONAWITZ GESELLSCHAFT M.B.H.
Pestalozzistrasse 128 Postfach 1
A-8700 Leoben-Donawitz (AT)**

(72) Erfinder : **Weber, Alfred
Luftenberg 229
A-4222 St. Georgen (AT)**
Erfinder : **Hochgatterer, Franz
Lebingerstrasse 8
A-4320 Perg (AT)**

(74) Vertreter : **Haffner, Thomas M., Dr. et al
Patentanwaltskanzlei Dipl.-Ing. Adolf
Kretschmer Dr. Thomas M. Haffner
Schottengasse 3a
A-1014 Wien (AT)**

EP 0 367 751 B1

## Beschreibung

Die Erfindung bezieht sich auf ein Verfahren zum kontinuierlichen Schmelzen von Schrott und/oder Roheisen in einem Konverter oder Schachtofen sowie auf eine Absticheinrichtung zur Durchführung dieses Verfahrens, mit wenigtens einer Verschlußeinrichtung für eine radiale Abstichöffnung des Konverters oder Schachtofens.

Es sind bereits allotherme Konverterverfahren bekannt, mit welchen Schrott vorgewärmt und/oder geschmolzen wird, wobei derartige Verfahren gegebenenfalls mit Roheisenzugabe durchgeführt werden. Für die Durchführung derartiger Verfahren sind aufwendige kippbare Öfen vorgeschlagen worden, wobei ein wesentlicher Nachteil der bekannten Verfahren darin zu erblicken ist, daß sie chargenweise arbeiten, da der Tiegel keinerlei Vorrichtungen zum kontinuierlichen Ablauf geschmolzenen Gutes aufweist.

Die Beheizung der bekannten allothermen Öfen für die Vorwärmung von Schrott und/oder der Schmelzen erfolgt üblicherweise durch Bodendüsen, die Kohlenstoff-Sauerstoff-Gemische in den Bodensumpf einblasen, oder durch Einblasen von Brennstoffen mit Sauerstoff über eine von oben eingeführte Lanze.

Aus der US-A-4 269 399 ist ein Konverter bekanntgeworden, wobei unmittelbar an eine im wesentlichen radiale Abstichöffnung ein Schieber als Verschlußeinrichtung angeschlossen ist. Die Abstichöffnung mündet dabei in eine am Schmelztiegel schwenkbar angeordnete Förderrinne, um einen Pfannenwechsel zu erleichtern.

Aus der DE-OS 35 31 261 ist bereits ein Verfahren und ein dafür geeigneter Konverter zum Herstellen von Stahl aus Schrott bekanntgeworden. Der Konverter für das sogenannte KVA-Verfahren wird mit metallischem Einsatz sowie Kohle und Zuschlägen betrieben, wobei es bei diesem KVA-Verfahren bekannt ist, die erforderliche Schmelzwärme durch Erdgas-Sauerstoff-Brenner aufzubringen. Die bisher im Rahmen des KVA-Verfahrens vorgeschlagenen Schmelztiegel weisen einen Bodenabstich auf, mit welchem ein kontinuierliches Arbeiten nicht ohne weiteres möglich ist. Es war auch bei diesen bekannten Verfahren bereits möglich, fahrbare Pfannen unter die Abstichöffnung zu bewegen, wobei gemeinsam mit dem geschmolzenen Bad auch die Schlacke ausgebracht wurde und das Abschlacken aus der nachfolgenden Pfanne vorgenommen wurde. Auf Grund des Bodenablasses konnte selbst bei einer kippbaren Ausführung des Schmelztiegels nur eine geringe Menge einer Schlacke im Schmelzgefäß bzw. Schmelztiegel zurückgehalten werden, so daß bei der kontinuierlichen. Weiterführung des Schmelzprozesses zunächst erst wieder eine entsprechende Schlackenmenge zur Erzielung einer gleichbleibenden Qualität aufgebaut werden mußte.

Ein wesentlicher Nachteil bei der Ausbildung von Konvertern als kippbare Konverter ist der hohe Aufwand für die Kippvorrichtung. Selbst bei entsprechender Auslegung läßt sich ein derartiges Verfahren mit schwenkbarem Konverter nur dann kontinuierlich durchführen, wenn anläßlich des Pfannenwechsels die Brenner gedrosselt oder abgestellt werden, wodurch insbesondere bei hohen Schmelzleistungen deutliche Kapazitätseinbußen auftreten. Beim Verschwenken eines Konverters zum Zwecke des Pfannenwechsels muß in der Regel auch die Schrott- und Roheisenzufuhr in Abstimmung zum Pfannenwechsel unterbrochen werden, wodurch sich ein ungleichmäßiger Polster des Beschickungsgutes über der Brennerzone ergibt. Ein derartiger ungleichmäßiger Polster über der Brennerzone führt zu einem ungleichmäßigen Ofengang und erschwert die Prozeßüberwachung. Selbst wenn beim Schwenken des Konverters darauf Bedacht genommen wird, einen entsprechenden Mindestpolster im Konverter zu belassen, führt dies zu zusätzlichem Energieaufwand für das Schwenken des Konverters.

Die Erfindung zielt nun darauf ab, bei einem Verfahren der eingangs genannten Art ein kontinuierliches Schmelzen ohne Drosseln und Abstellen von Brennern während des Pfannenwechsels zu ermöglichen. Gleichzeitig zielt das erfindungsgemäße Verfahren darauf ab, die Prozeßüberwachung zu erleichtern und den Ofengang zu vergleichmäßigen. Zur Lösung dieser Aufgabe besteht das erfindungsgemäße Verfahren im wesentlichen darin, daß der Konverter nahe dem Boden mit unterstöchiometrischen Brennern, deren Flammen im wesentlichen radial in das Innere des Konverters gerichtet sind, beheizt wird, daß in Abstand oberhalb der Brennerebene Sekundärluft oder $O_2$ zur vollständigen Verbrennung zugeführt wird, daß die Schmelze über eine seitlich an den Konverter angeschlossene Absticheinrichtung gegebenenfalls gemeinsam mit Schlacke in eine fahrbare Pfanne ausgetragen wird und daß die Absticheinrichtung zum Pfannenwechsel verschlossen wird. Dadurch, daß bei einem derartigen Verfahren nahe dem Boden mit unterstöchiometrischen Brennern die erforderliche Wärme eingebracht wird, läßt sich insbesondere bei Verwendung von Erdgas-Sauerstoff-Brennern durch Regelung des Erdgas-Sauerstoff-Verhältnisses die gewünschte Flammtemperatur und der gewünschte Oxidationsgrad einstellen. Die Verwendung unterstöchiometrischer Brenner führt hiebei zu einer Verbesserung des Eisenausbringens und zu einer Verringerung der Oxidationsverluste. Dadurch, daß nun in Abstand oberhalb der Brennerebene Sekundärluft oder Sauerstoff zur vollständigen Verbrennung zugeführt wird, wird die chemisch gebundene Wärme weitgehend vollständig ausgenützt und die kontinuierlich zugesetzte Charge in hohem Maße vorgewärmt, so daß das Verfahren beschleunigt wird. Insgesamt lassen sich bei einer derartigen

2

Verfahrensführung hohe Durchsatzleistungen erzielen, wobei dadurch, daß die Absticheinrichtung zum Pfannenwechsel verschlossen wird, eine weitere einfache Möglichkeit geboten wird, eine hinreichende Menge an Charge und Schmelzbad im Konverter zurückzuhalten, so daß auch beim Pfannenwechsel keine nennenswerten Änderungen des Ofenganges auftreten und das Verfahren mit unverminderter Geschwindigkeit auch während des Pfannenwechsels in kontrollierbarer Weise weitergeführt werden kann.

Die erfindungsgemäße Absticheinrichtung für die Durchführung dieses Verfahrens mit wenigstens einer Verschlußeinrichtung für eine radiale Abstichöffnung des Konverters oder Schachtofens ist im wesentlichen dadurch gekennzeichnet, daß eine Verschlußeinrichtung an eine an die radiale Abstichöffnung des Konverters oder Schachtofens angeschlossene geschlossene erkerförmige Absticheinrichtung mit zur Achse des Konverters oder Schachtofens im wesentlichen parallel orientiertem Abstichloch angeschlossen ist. Im folgenden wird die Öffnung des Konverters, über welche Bad und gegebenenfalls Schlacke abgezogen wird, als Abstichöffnung bezeichnet, wohingegen ein an diese Abstichöffnung angeschlossener Bauteil als Absticheinrichtung bezeichnet wird. Bei derartigen Absticheinrichtungen muß naturgemäß wiederum eine Öffnung vorgesehen werden, über welche das in die Absticheinrichtung eintretende Schmelzbad bzw. die Schlacke ausgebracht werden kann und diese Öffnung wird im folgenden Abstichloch bezeichnet, um sie von der Abstichöffnung des Konverters zu unterscheiden. Insgesamt hat eine derartige Absticheinrichtung bei geöffneter Abstichöffnung und geöffnetem Abstichloch die Funktion eines Ausgusses, über welchen Bad und gegebenenfalls Schlacke aus dem Konverter bzw. dem Schachtofen in die Pfanne ausgebracht wird. Durch die erfindungsgemäße Ausbildung läßt sich wahlweise die Abstichöffnung des Konverters oder des Schachtofens oder aber das Abstichloch verschließen, so daß während des Abschlusses des Abstichloches bzw. der Abstichöffnung die Pfanne gewechselt werden kann. Dabei ist bei Betätigung der Verschlußeinrichtung der geschlossenen Absticheinrichtung in jedem Fall für einen Verschluß der Abstichöffnung Sorge getragen. Mit Vorteil ist die Ausbildung hiebei so getroffen, daß die Verschlußeinrichtung im Inneren der Absticheinrichtung gelagert oder geführt ist, wobei eine derartige Absticheinrichtung in besonders bevorzugter Weise lösbar mit dem Konverter bzw. dem Schachtofen verbunden sein kann. Die Verschlußeinrichtung kann hiebei in besonders einfacher Weise so ausgebildet sein, daß ein in Achsrichtung des Abstichloches verschiebbarer Verschlußstopfen angeordnet ist, welcher mit einer den an die radialen Abstichöffnung anschließenden Erker durchsetzenden, die Achse der Abstichöffnung schneidenden oder kreuzenden Betätigungsstange verbunden ist, wodurch eine sichere Betätigung der Verschlußeinrichtung gewährleistet ist.

Anstelle eines Verschlußstopfens kann die Verschlußeinrichtung auch so ausgebildet sein, daß an oder in der erkerförmigen Absticheinrichtung eine quer zur Achse des Abstichloches und/oder der Abstichöffnung verschiebbare Schieberplatte geführt ist. Auch bei einer Ausbildung der Verschlußeinrichtung mit einer Schieberplatte ist es besonders vorteilhaft, diese Verschlußeinrichtung im Inneren der Absticheinrichtung zu führen, wodurch die Betriebssicherheit erhöht wird.

Die Verwendung einer Absticheinrichtung mit verschließbarer Abstichöffnung bzw. verschließbarem Abstichloch stellt hohe Verschleißbeanspruchungen an die Absticheinrichtung. Die Ausbildung ist daher mit Vorteil so getroffen, daß im Abstichloch ein Ausgußstein mittels eines Befestigungsringes lösbar festgelegt ist. Auf diese Weise wird ein besonders hoch beanspruchter Teil der Absticheinrichtung im Falle eines übermäßigen Verschleißes austauschbar und es wird die Dichtung des Verschlußstopfens im Fall eines Schadhaftwerdens des entsprechenden Dichtsitzes durch Austausch des Ausgußsteines wiederum gesichert. Mit Vorteil ist die Ausbildung hiebei so getroffen, daß die erkerförmige Abstichvorrichtung ein sich nach unten konisch erweiterndes Abstichloch aufweist, in welches der Ausgußstein mit konischen Außenflächen von unten dichtend einsetzbar ist, wodurch der Austausch des Ausgußsteines wesentlich erleichtert wird.

Der Antrieb des Verschlußstopfens bzw. der Schieberplatte kann in besonders einfacher Weise über eine Betätigungsstange erfolgen, welche in vorteilhafter Weise mit einem hydraulischen Zylinder-Kolbenaggregat verbunden ist. Mittels eines derartigen hydraulischen Zylinder-Kolbenaggregates können auch entsprechend erhöhte Schließkräfte aufgebracht werden, um in jedem Fall einen dichten Abschluß während des Pfannenwechsels zu gewährleisten. Zur Erleichterung von Reparaturarbeiten im Inneren der Ausgußeinrichtung, insbesondere zur Erleichterung des Austausches des Ausgußsteines weist die Ausgußeinrichtung bevorzugt einen lösbaren Deckel auf. Um Reparaturen als Heißreparaturen durchführen zu können, ist die Ausbildung hiefür mit Vorteil so getroffen, daß die erkerförmige Absticheinrichtung an ihrer dem Abstichloch gegenüberliegenden Wand einen nach oben öffenbaren, insbesondere wassergekühlten, Deckel aufweist und/oder eine mit dem Abstichloch fluchtende Bohrung mit einem dem Außendurchmesser des Verschlußstopfens entsprechenden Innendurchmesser aufweist. Ein derartiger wassergekühlter Deckel erlaubt nach dem Abnehmen den Zugang zum Abstichloch bzw. zum Ausgußstein sowohl von oben als auch von unten, so daß nach Öffnen eines Befestigungsringes für den Ausgußstein ein Ausstoßen des Ausgußsteines mittels einer von oben in den Erker eingebrachten Vorrichtung möglich wird.

Die Erfindung wird nachfolgend an Hand von in der Zeichnung dargestellten Ausführungsbeispielen näher erläutert. In dieser zeigen

Fig.1 einen KVA-Konverter mit einer durch einen Stopfen verschließbaren Absticheinrichtung,

Fig.2 eine abgewandelte Ausbildung für die Abstichöffnung des Konverters,

Fig.3 eine KVA-Anlage mit einer Absticheinrichtung, die durch eine Schieberplatte verschließbar ist,

Fig.4 eine analoge Ausbildung, bei welcher ein keramischer Schieber zum Verschluß der Abstichöffnung des Konverters vorgesehen ist und

Fig.5 eine Ausbildung mit einer Abstichlochverschlußeinrichtung am Konverter selbst.

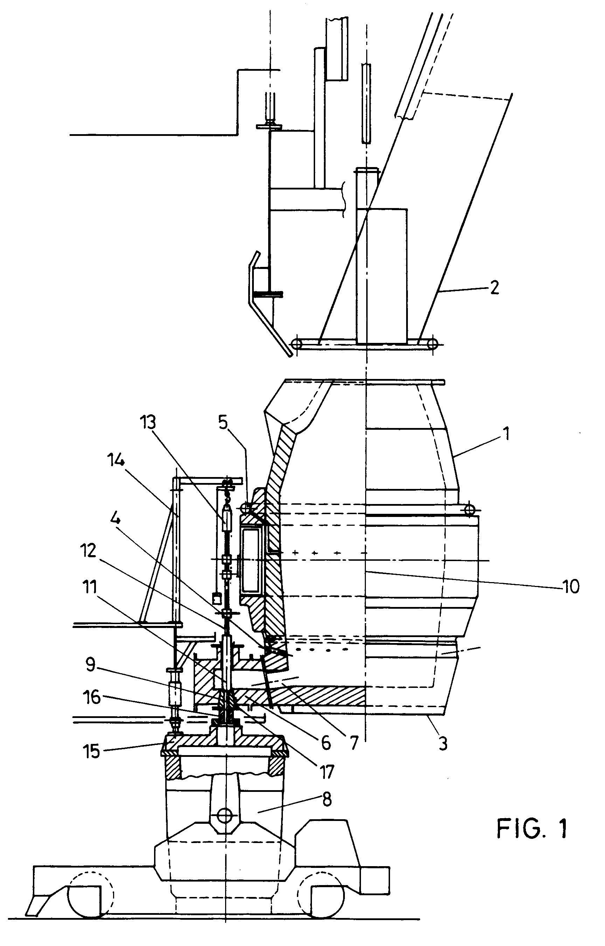

In Fig.1 ist mit 1 ein Konverter oder Schachtofen bezeichnet, welchem über eine Chargiereinrichtung 2 Schrott und/oder Roheisen zugeführt wird. Der Konverter 1 weist nahe seinem Boden 3 miteinander über eine Ringleitung verbundene Brenner auf, von denen einer in Fig.1 mit 4 bezeichnet ist, deren Flammen im wesentlichen radial in das Innere des Konverters gerichtet sind. Die Brenner 4 werden unterstöchiometrisch betrieben und für die vollständige Verbrennung der zugeführten Charge wird oberhalb der durch die Brenner 4 gebildeten Ebene Sekundärluft oder Sauerstoff über eine weitere, schematisch mit 5 bezeichnete Ringleitung zugeführt. Zum Ausbringen von Schmelze ist seitlich an den Konverter 1 eine Absticheinrichtung 6 angeschlossen, welche mit dem Konverter über die nahe dem Konverterboden 3 angeordnete Abstichöffnung 7 in Verbindung steht. Zum Austragen der Schmelze gegebenenfalls gemeinsam mit Schlacke in eine fahrbare Pfanne 8 weist die erkerförmig ausgebildete Absticheinrichtung 6 ein Abstichloch 9 auf, dessen Achse im wesentlichen parallel zur Achse 10 des Konverters 1 verläuft. Zum Pfannenwechsel wird das Abstichloch 9 durch einen Stopfen 11 aus feuerfestem Material verschlossen, wobei der Stopfen 11 über eine Stopfenstange 12, welche beispielsweise hydraulisch betätigt werden kann, bewegt wird. Die hydraulische Betätigungseinrichtung ist in Fig.1 schematisch mit 13 bezeichnet und an einem schematisch mit 14 bezeichneten Gerüst gelagert. Nach dem Verschließen des Abstichloches 9 durch den Stopfen 11 wird der Pfannendeckel 15 angehoben, worauf die gefüllte Pfanne 8 verfahren wird und eine neue Pfanne in mit dem Abstichloch 9 fluchtende Position gebracht wird. Die Speicherkapazität des Konverters bzw. Schachtofens 1 ist dabei so bemessen, daß die während des Pfannenwechsels kontinuierlich erzeugte Menge Flüssigstahl sicher aufgenommen werden kann. Wenn der Stopfen 11 zum Verschließen des Abstichloches verschlissen ist, wird er nach oben über die Betätigungsvorrichtung ausgezogen und durch einen neuen ersetzt, wobei dieser Wechsel ohne Produktionsunterbrechung durchgeführt werden kann.

Da die Absticheinrichtung 6 durch die Verwendung einer Verschlußeinrichtung einem starken Verschleiß im Bereich des Abstichloches 9 unterworfen ist, ist im Abstichloch ein lösbarer Ausgußstein 16 mittels eines Befestigungsringes 17 festgelegt, wobei für einen einfachen Austausch des Ausgußsteines 16 das Abstichloch sich nach unten konisch erweiternd ausgebildet ist, wodurch der Ausgußstein 16 von unten dichtend in das Abstichloch eingesetzt werden kann. Zum Austausch eines verschlissenen Ausgußsteines 16 ist dabei eine Unterbrechung des Produktionsbetriebes notwendig, wobei diese Reparatur als Heißreparatur durchgeführt wird. Nach dem Öffnen des Befestigungsringes 17 wird der Ausgußstein 16 mittels einer von oben in den Erker anstelle des Verschlußstopfens 11 einbringbaren Vorrichtung nach unten ausgestoßen und anschließend durch einen neuen Ausgußstein ersetzt.

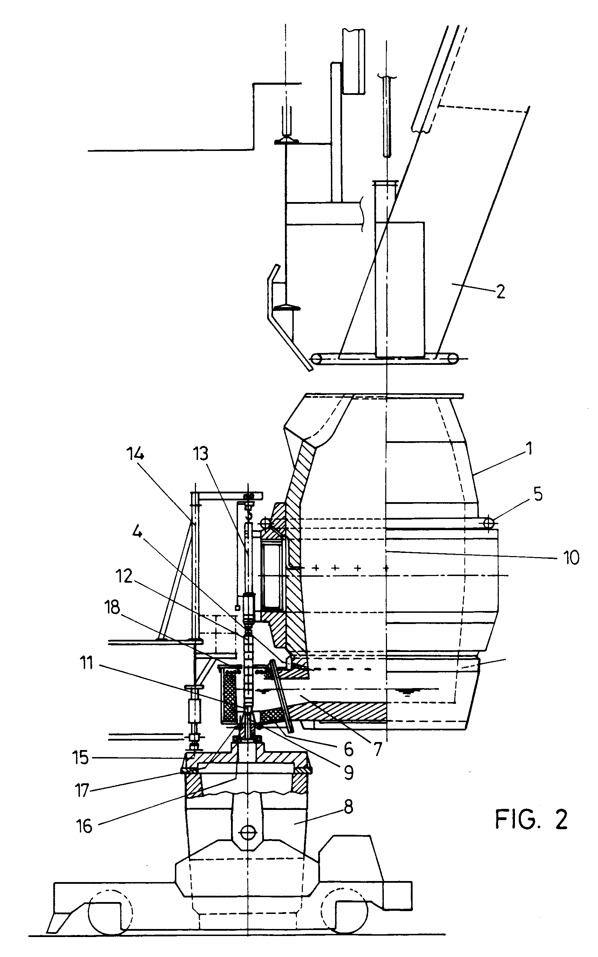

Bei der in Fig.2 dargestellten Ausführungsform sind für gleiche Bauteile die Bezugszeichen der Fig.1 beibehalten worden. Bei der Ausführungsform gemäß Fig.2 ist die an die Abstichöffnung 7 des Konverters 1 anschließende Absticheinrichtung mit einem wassergekühlten Deckel 18 abgeschlossen, welcher von der Stopfenstange 12 durchdrungen wird. Ein derartiger wassergekühlter Deckel gestattet dabei die leichtere Durchführung von Heißreparaturen zum Austausch des Ausgußsteines 16.

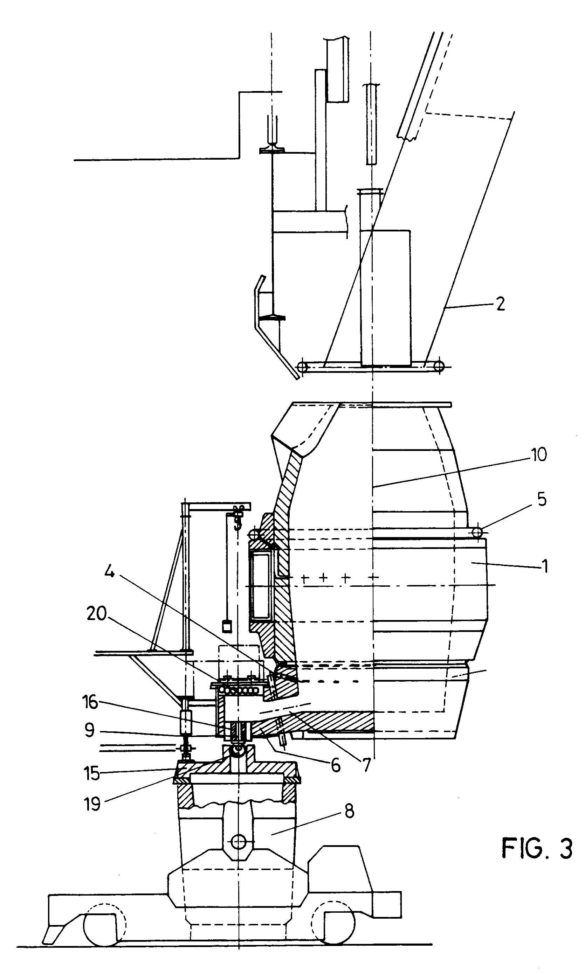

Bei der in Fig.3 gezeigten Ausführungsform eines Konverters 1 mit an die Abstichöffnung 7 anschließender Absticheinrichtung 6 wird das Abstichloch 9 durch eine vorzugsweise hydraulisch betätigte Schieberplatte 19 aus hitzebeständigem und hochverschleißfestem Material verschlossen. Zum Abschluß der Absticheinrichtung 6 ist ein nach oben schwenkbarer wassergekühlter Deckel 20 vorgesehen, welcher für ein Ersetzen des Ausgußsteines 16 im Abstichloch 9 geöffnet werden kann, um den Ausgußstein durch eine nicht näher dargestellte Vorrichtung wiederum nach unten auszustoßen.

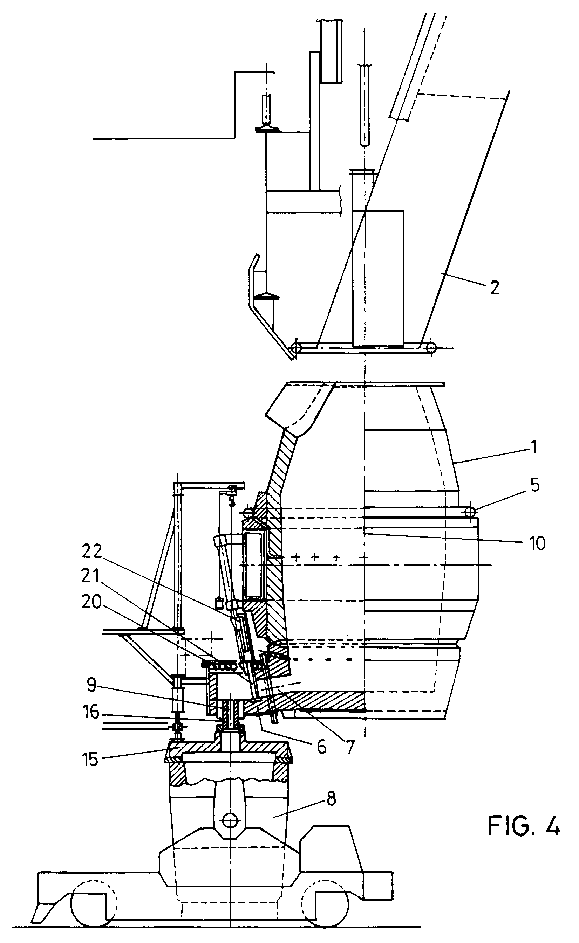

Bei der Ausführungsform gemäß Fig.4 schließt an die Abstichöffnung 7 des Konverters wiederum eine erkerförmige Absticheinrichtung 6 an, welche ein Abstichloch 9 aufweist, in welcher ein Ausgußstein 16 vorgesehen ist. Alternativ zu den Ausführungsformen gemäß Fig.1 bis 3, bei welchen jeweils ein Verschließen des Abstichloches 9 für einen Pfannenwechsel vorgenommen wurde, ist in der Ausführungsform gemäß Fig.4 der Zulauf der Absticheinrichtung 6, d.h. die Abstichöffnung 7 des Konverters 1 durch einen hydraulisch betätigbare Schieberplatte 21 während eines Pfannenwechsels verschließbar. Die hydraulische Betätigungseinrichtung ist mit 22 bezeichnet. Für ein Austoßen eines verschlissenen Ausgußsteines ist wiederum ein schwenkbarer und wassergekühlter Deckel 20 vorgesehen.

Durch die Ausbildung einer an den Konverter anschließenden Absticheinrichtung mit einer Verschlußmöglichkeit des Abstichloches bzw. der Abstichöffnung wird ein kontinuierliches Schmelzen oder Drosseln und Abstellen der unterstöchiometrisch betriebenen Brenner 4 während des Wechsels der Pfannen 8 vermieden und dadurch eine Vermeidung von beträchtlichen Kapazitätseinbußen ermöglicht. Gleichzeitig wird durch die kontinuierliche Schrott- und/oder Roheisenbeschickung ein gleichmäßiger Polster des Beschickungsgutes über der Brennerzone erzielt, wodurch ein gleichmäßiger Ofengang und eine wesentlich erleichterte Prozeßüberwachung erzielbar ist.


## Patentansprüche

1. Verfahren zum kontinuierlichen Schmelzen von Schrott und/oder Roheisen in einem Konverter oder Schachtofen (1), dadurch gekennzeichnet, daß der Konverter (1) nahe dem Boden (3) mit unterstöchiometrischen Brennern (4), deren Flammen im wesentlichen radial in das Innere des Konverters (1) gerichtet sind, beheizt wird, daß in Abstand oberhalb der Brennerebene Sekundärluft oder $O_2$ zur vollständigen Verbrennung zugeführt wird, daß die Schmelze über eine seitlich an den Konverter (1) angeschlossene Absticheinrichtung (6) gegebenenfalls gemeinsam mit Schlacke in eine fahrbare Pfanne (8) ausgetragen wird und daß die Absticheinrichtung (6) zum Pfannenwechsel verschlossen wird.

2. Absticheinrichtung für die Durchführung des Verfahrens nach Anspruch 1 mit wenigstens einer Verschlußeinrichtung für eine radiale Abstichöffnung des Konverters oder Schachtofens, dadurch gekennzeichnet, daß eine Verschlußeinrichtung an eine an die radiale Abstichöffnung (7) des Konverters oder Schachtofens angeschlossene geschlossene erkerförmige Absticheinrichtung (6) mit zur Achse (10) des Konverters oder Schachtofens im wesentlichen parallel 'orientiertem Abstichloch (9) angeschlossen ist.

3. Absticheinrichtung nach Anspruch 2, dadurch gekennzeichnet, daß die Verschlußeinrichtung im Inneren der Absticheinrichtung (6) gelagert oder geführt ist.

4. Absticheinrichtung nach Anspruch 2 oder 3, dadurch gekennzeichnet, daß ein in Achsrichtung des Abstichloches verschiebbarer Verschlußstopfen (11) angeordnet ist, welcher mit einer den an die radialen Abstichöffnung (7) anschließenden Erker durchsetzenden die Achse der Abstichöffnung schneidenden oder kreuzenden Betätigungsstange (12) verbunden ist.

5. Absticheinrichtung nach Anspruch 2 oder 3, dadurch gekennzeichnet, daß an oder in der erkerförmigen Absticheinrichtung (6) eine quer zur Achse des Abstichloches und/oder der Abstichöffnung verschiebbare Schieberplatte (21) geführt ist.

6. Absticheinrichtung nach einem der Ansprüche 2 bis 5, dadurch gekennzeichnet, daß im Abstichloch (9) ein Ausgußstein (16) mittels eines Befestigungsringes (17) lösbar festgelegt ist.

7. Absticheinrichtung nach Anspruch 6, dadurch gekennzeichnet, daß die erkerförmige Abstichvorrichtung (6) ein sich nach unten konisch erweiterndes Abstichloch (9) aufweist, in welches der Ausgußstein (16) mit konischen Außenflächen von unten dichtend einsetzbar ist.

8. Absticheinrichtung nach einem der Ansprüche 2 bis 7, dadurch gekennzeichnet, daß die Betätigungsstange (12) für den Verschlußstopfen (11) oder eine Schieberplatte (21) mit einem hydraulischen Zylinder-Kolbenaggregat (22) verbunden ist.

9. Absticheinrichtung nach einem der Ansprüche 2 bis 8, dadurch gekennzeichnet, daß die erkerförmige Absticheinrichtung (16) an ihrer dem Abstichloch (9) gegenüberliegenden Wand einen nach oben öffenbaren, insbesondere wassergekühlten, Deckel (20) aufweist und/oder eine mit dem Abstichloch (9) fluchtende Bohrung mit einem dem Außendurchmesser des Verschlußstopfens entsprechenden Innendurchmesser aufweist.

10. Absticheinrichtung nach einem der Ansprüche 2 bis 9, dadurch gekennzeichnet, daß die erkerförmige Absticheinrichtung (6) lösbar mit dem Konverter (1) verbunden ist.


## Claims

1. A method for the continuous melting of scrap and/or pig iron in a converter or shaft furnace (1), characterised in that the converter (1) is heated near to the base (3) with substoichiometic burners (4), the flames of which are directed substantially radially into the interior of the converter (1), in that secondary air or $O_2$ is admitted at a distance above the burner plane for complete combustion, in that the melt is discharged via a tapping apparatus (6) connected laterally to the converter (1), optionally together with slag, into a movable ladle (8), and in that the tapping apparatus (6) is closed for the purpose of changing the ladle.

2. A tapping apparatus for carrying out the method according to Claim 1, with at least one closure means for a radial tap orifice in the converter or shaft furnace, characterised in that a closure means is connected to a closed, bay-shaped tapping apparatus (6) attached to the radial tap orifice (7) in the converter or shaft furnace, with a tap hole (9) directed substantially parallel to the axis (10) of the converter or shaft furnace.

3. A tapping apparatus according to Claim 2, characterised in that the closure means is mounted or guided inside the tapping apparatus (6).

4. A tapping apparatus according to Claim 2 or 3, characterised in that a closure plug (11) is disposed in the axial direction of the tap hole and is connected to an actuating rod (12) which intersects the axis of the tap orifice (7) and which passes through the bay adjoining the radial tap orifice.

5. A tapping apparatus according to Claim 2 or 3, characterised in that a slide plate (21) displaceable transversely to the axis of the tap hole and/or the tap orifice is guided on or in the bay-shaped tapping apparatus (6).

6. A tapping apparatus according to any one of Claims 2 to 5, characterised in that an outlet block (16) is releasably secured in the tap hole (9) by means of a securing ring (17).

7. A tapping apparatus according to Claim 6, characterised in that the bay-shaped tapping apparatus (6) has a tap hole (9) which widens conically downwards and in which the outlet block (16) with conical outer surfaces can be inserted from below so as to effect a seal.

8. A tapping apparatus according to any one of Claims 2 to 7, characterised in that the actuating rod (12) for the closure plug (11) or a slide plate (21) is connected with a hydraulic piston-cylinder assembly (22).

9. A tapping apparatus according to any one of Claims 2 to 8, characterised in that on its wall opposite the tap hole (9) the bay-shaped tapping apparatus (16) [sic] has a cover (20) which can be opened upwardly and which, in particular, is water-cooled, and/or has a bore in alignment with the tap hole (9) and which is of an internal diameter corresponding to the outer diameter of the closure plug.

10. A tapping apparatus according to any one of Claims 2 to 9, characterised in that the bay-shaped tapping apparatus (6) is releasably connected with the converter (1).


**Revendications**

1. Procédé pour la fusion continue des ferrailles et/ou de la fonte brute dans un convertisseur ou dans un four à cuve (1), caractérisé en ce que le convertisseur (1) est chauffé, au voisinage du fond (3) à l'aide de brûleurs sous-stochiométriques (4) dont les flammes sont dirigées pratiquement radialement dans le volume intérieur du convertisseur (1), en ce que, à une certaine distance au-dessus du plan des brûleurs, de l'air secondaire ou du $O_2$ est introduit pour assurer la combustion totale, en ce que la masse fondue est extraite à l'aide d'un dispositif de coulée (6) rassordé latéralement au convertisseur (1), éventuellement conjointement avec le laitier, dans une poche roulante (8), et en ce que le dispositif de coulée (6) est fermé pour le changement de poche.

2. Dispositif de coulée pour la mise en oeuvre du procédé selon la revendication 1, comprenant au moins un dispositif de fermeture pour l'orifice de coulée radial du convertisseur ou du four à cuve, caractérisé en ce qu'un dispositif de fermeture est raccordé à un dispositif de coulée (6) en forme de bec, raccordé à l'orifice de coulée radial (7) du convertisseur ou du four à cuve, qui est muni d'un trou de coulée (9) orienté pratiquement parallèlement à l'axe (10) du convertisseur ou du four à cuve.

3. Dispositif de coulée selon la revendication 2, caractérisé en ce que le dispositif de fermeture est tourillonné ou guidé à l'intérieur du dispositif de coulée (6).

4. Dispositif de coulée selon la revendication 2 ou 3, caractérisé en ce qu'il est prévu une quenouille de fermeture (11) mobile en translation dans la direction axiale du trou de coulée, qui est reliée à une tige de manoeuvre (12) qui traverse le bec raccordé à l'orifice de coulée radial (7), et qui coupe ou croise l'axe de l'orifice de coulée.

5. Dispositif de coulée selon la revendication 2 ou 3, caractérisé en ce que le long ou dans le dispositif de coulée (6) en forme de bec, est guidée une plaque de vanne (21) mobile en translation transversalement à l'axe du trou de coulée et/ou de l'orifice de coulée.

6. Dispositif de coulée selon une des revendications 2 à,5, caractérisé en ce qu'une busette de coulée (16) est fixée de façon amovible dans le trou de coulée (9) à l'aide d'une bague de fixation (17).

7. Dispositif de coulée selon la revendication 6, caractérisé en ce que le dispositif de coulée (6) en forme de bec présente un trou de coulée (9) qui s'élargit vers le bas avec une forme conique, et dans lequel la busette de coulée (16) peut être emboîtée à joint étanche de bas en haut par des surfaces extérieures coniques.

8. Dispositif de coulée selon une des revendications 2 à 7, caractérisé en ce que la tige de manoeuvre (12) de la quenouille de fermeture (11), ou une plaque de vanne (21) est reliée à un vérin hydraulique à cylindre et piston (22).

9. Dispositif de coulée selon une des revendications 2 à 8, caractérisé en ce que le dispositif de coulée (16) en forme de bec présente, au droit de sa paroi qui est à l'opposé du trou de coulée (9), un couvercle (20) pouvant s'ouvrir vers le haut, et notamment refroidi par l'eau et/ou présente un perçage situé dans l'alignement du trou de coulée (9) et possédant un diamètre intérieur qui correspond au diamètre extérieur de la quenouille.

6

10. Dispositif de coulée selon une des revendications 2 à 9, caractérisé en ce que le dispositif de coulée (6) en forme de bec est fixé au convertisseur (1) par une liaison démontable.

FIG. 1

FIG. 2

FIG. 3

FIG. 4